# EUROPEAN PATENT APPLICATION

(11) **EP 4 586 580 A1**
(43) Date of publication of application: **16.07.2025**
(21) Application number: 23887430.9
(22) Date of filing: 31.05.2023
(51) Int. Cl.: H04L 45/741

(54) **COMPUTING POWER RESOURCE ANNOUNCEMENT METHOD, COMPUTING POWER TRAFFIC PROCESSING METHOD, COMMUNICATION DEVICE, AND MEDIUM**

(30) Priority: 09.11.2022 CN 202211398346
(71) Applicant: ZTE Corporation, Shenzhen, Guangdong 518057 (CN)
(72) Inventor: WEI, Yuehua, Shenzhen, Guangdong 518057 (CN); ZHANG, Zheng, Shenzhen, Guangdong 518057 (CN)
(74) Representative: Savi, Massimiliano
(86) International application number: PCT/CN2023/097507
(87) International publication number: WO 2024/098731

(57) **Abstract**

The present application provides a computing power resource announcement method, a routing table establishing method, a computing power traffic processing method, a communication device and a computer readable storage medium. The computing power resource announcement method comprises: setting an address family type in a boundary gateway protocol message as a computing power routing type, wherein the computing power routing is routing corresponding to a computing power resource; filling the boundary gateway protocol message with computing power resource information connected to a first node; and sending the boundary gateway protocol message to a second node.

## Description

### CROSS-REFERENCE TO RELATED APPLICATION

This application is filed on the basis of Chinese patent application No. 202211398346.2 filed November 9, 2022, and claims priority to the Chinese patent application, the entire contents of which are incorporated herein by reference.

### TECHNICAL FIELD

Embodiments of the present disclosure relate to the technical field of communication, and in particular, to a computing power resource announcement method, a routing table establishment method, a computing power traffic processing method, a communication device, and a computer-readable storage medium.

### BACKGROUND

In the related art, a computing power resource in a computing-aware network is distributed in separate computing power nodes, and computing power routes are published and announced through the Border Gateway Protocol (BGP) or various Interior Gateway Protocols (IGPs) to realize the discovery and invocation of distributed computing power resources.

There are many types of computing power resources, ranging from servers to CPUs. If all the resources are assigned Internet Protocol version 4 (IPv4) or Internet Protocol version 6 (IPv6) addresses, the limited IP addresses are wasted, thereby leading to an increased difficulty in managing, planning, and deploying computing power resources. Therefore, how to reduce the difficulty in managing, planning, and deploying computing power resources is an urgent problem to be solved.

### SUMMARY

Embodiments of the present disclosure provide a computing power resource announcement method, a routing table establishment method, a computing power traffic processing method, a communication device, and a computer-readable storage medium, to reduce the difficulty in managing, planning, deploying computing power resources.

In accordance with a first aspect of the present disclosure, an embodiment provides a computing power resource announcement method, applied to a first node, the method including: setting an address family type in a BGP message to a computing power route type, where a computing power route is a route corresponding to a computing power resource; adding computing power resource information of a computing power resource connected to a first node to the BGP message; and sending the BGP message to a second node.

In accordance with a second aspect of the present disclosure, an embodiment provides a routing table establishment method, applied to a second node, the method including: generating, according to a computing power resource announcement message announced by a first node, a computing power routing table with a next hop being the first node, where the computing power resource announcement message is obtained according to the computing power resource announcement method in accordance with the first aspect.

In accordance with a third aspect of the present disclosure, an embodiment provides a computing power traffic processing method, applied to a second node, the method including: receiving computing power traffic sent to a computing power resource connected to a first node; obtaining computing power resource information and a computing power encapsulation type according to a BGP message advertised by the first node; encapsulating the computing power traffic according to the computing power resource information and the computing power encapsulation type; and sending the encapsulated computing power traffic to the first node, where the BGP message is obtained according to the computing power resource announcement method in accordance with the first aspect.

In accordance with a fourth aspect of the present disclosure, an embodiment provides a computing power traffic processing method, applied to a first node, the method including: receiving computing power traffic sent by a second node, where the computing power traffic is obtained according to the computing power traffic processing method in accordance with the third aspect; decapsulating the computing power traffic to obtain target computing power resource information and decapsulated computing power traffic; and forwarding the decapsulated computing power traffic to a target computing power resource according to the computing power routing table and the target computing power resource information.

In accordance with a fifth aspect of the present disclosure, an embodiment of the present disclosure provides a communication device, including: at least one processor; and at least one memory configured to store at least one program, where the at least one program, when executed by the at least one processor, causes the at least one processor to implement the computing power resource announcement method in accordance with the first aspect, the routing table establishment method in accordance with the second aspect, or the computing power traffic processing method in accordance with the third aspect or the fourth aspect.

In accordance with a sixth aspect of the present disclosure, an embodiment provides a computer-readable storage medium storing a processor-executable program, where the processor-executable program, when executed by a processor, causes the processor to implement the computing power resource announcement method in accordance with the first aspect, the routing table establishment method in accordance with the second aspect, or the computing power traffic processing method in accordance with the third aspect or the fourth aspect.

In an embodiment of the present disclosure, an address family type in a BGP message is set to a computing power route type, and computing power resource information corresponding to a node is incorporated to the BGP message to announce computing power resources, thereby accurately announcing the computing power resources, and avoiding a confusion with other non-computing-power routes. The computing power traffic can be guided to a correct computing power resource for processing by encapsulating computing power traffic based on a computing power resource identifier, thereby further simplifying the planning and management of computing power resources, and making the announcement of computing power resources simpler and more efficient.

### BRIEF DESCRIPTION OF DRAWINGS

FIG. 1 is a schematic diagram of a network communication system according to an embodiment of the present disclosure;
FIG. 2 is a flowchart of a computing power resource announcement method according to an embodiment of the present disclosure;
FIG. 3 is a schematic diagram of a node R1 and a computing power resource network connected to the node R1 according to an example of the present disclosure;
FIG. 4 is a schematic diagram of a BGP message format according to an example of the present disclosure;
FIG. 5 is a flowchart of a routing table establishment method according to an embodiment of the present disclosure;
FIG. 6 is a flowchart of a computing power traffic processing method according to an embodiment of the present disclosure;
FIG. 7 is a flowchart of a computing power traffic processing method according to another embodiment of the present disclosure;
FIG. 8 is a schematic diagram of a BGP network system according to an example of the present disclosure;
FIG. 9 is a schematic structural diagram of a message used by a node R1 to announce computing power resources according to an example of the present disclosure;
FIG. 10 is a schematic structural diagram of a computing power header according to an example of the present disclosure;
FIG. 11 is a schematic structural diagram of a target computing power resource identifier and an encapsulation node identifier according to an embodiment of the present disclosure;
FIG. 12 is a schematic diagram of a node R2 and a computing power resource network connected to the node R2 according to an example of the present disclosure;
FIG. 13 illustrates a structure of a computing power resource announcement message of a node R2 according to an example of the present disclosure; and
FIG. 14 is a schematic structural diagram of a communication device according to an embodiment of the present disclosure.

### DETAILED DESCRIPTION

To make the objects, technical schemes, and advantages of the present disclosure clearer, the present disclosure is described in further detail in conjunction with accompanying drawings and embodiments. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the embodiments of the present disclosure, any embodiment or design described following the terms such as "in an embodiment," "in some embodiments," and "for example" is used to indicate examples, explanations, or illustrations, and should not be construed as being superior or advantageous over other embodiments or designs. The use of the terms such as "in an embodiment," "in some embodiments," and "for example" is intended to present the relevant concepts in a concrete manner.

In the related art, a computing-aware network is a novel information infrastructure for on-demand allocation and flexible scheduling of computing resources, storage resources, and network resources among clouds, edges, and terminal devices according to service requirements. The computing-aware network is essentially a computing power resource service. In the future, enterprise customers or individual users not only need networks and clouds, but also need to schedule computing tasks to optimal computing nodes through optimal network paths. Computing power resources may be distributed anywhere in the network, and an efficient computing-aware network uses a networking technology to integrate computing power resources.

The computing-aware network includes a computing network infrastructure layer, an orchestration management layer, and an operation service layer, and is a novel information service system that integrates "connection, computing power, and capability". In order to realize scheduling of computing power, a route corresponding to the computing power resource should be announced. For the convenience of description, a "route corresponding to a computing power resource" is briefly referred to as a "computing power route" below. Computing power routes may be announced to a distributed router node or to a centralized controller device, and the controller device correctly schedules a user's computing power request according to the information of the routes.

BGP is an important routing protocol that provides interconnection to networks. The BGP can achieve reachability by maintaining an IP routing table or "prefix" table, and is a vector routing protocol. The BGP determine a route based on paths, network policies, or rule sets.

In a computing-aware network of the related art, computing power resources are distributed in separate computing power nodes, and BGP or various IGPs may be used to connect the computing power nodes. Further, the computing power routes can be published and announced through BGP and IGP, thereby realizing the discovery and invocation of distributed computing power resources. Currently, computing power resources are identified through IPv4 or IPv6 routes, thereby realizing the announcement of routes in BGP/IGP.

However, there are a wide range of types of computing power resources, which may be servers or CPUs. If all the computing power resources are assigned IPv4 or IPv6 addresses in order to correctly announce the computing power resources, the limited IP addresses are wasted, thereby leading to an increased difficulty in managing, planning, and deploying computing power resources. In addition, if existing IP addresses are assigned to computing power resources to announce the computing power resources, a confusion with the announcement of non-computing-power routes is likely to occur, which makes it difficult for the device to process and may cause routing security issues.

To solve the above problems, the present disclosure provides a computing power resource announcement method, a routing table establishment method, a computing power traffic processing method, a communication device, and a computer-readable storage medium. An address family type in a BGP message is set to a computing power route type, and computing power resource information corresponding to a node is incorporated to the BGP message to announce computing power resources, thereby accurately announcing the computing power resources, and avoiding the confusion with other non-computing-power routes. A numerical identifier that can uniquely identify a computing power resource is added as a computing power resource identifier to distinguish the computing power resource, instead of assigning the computing power resource with an IPv4 or IPv6 address, thereby reducing the waste of IPv4 or IPv6 addresses, and the difficulty in managing, planning, and deploying computing power resources. In the present disclosure, computing power traffic is encapsulated based on a computing power resource identifier. The computing power traffic is traffic data of a computing power resource service that needs to be provided. As such, the computing power traffic can be guided to a correct computing power resource for processing, thereby further simplifying the planning and management of computing power resources, and making the announcement of computing power resources simpler and more efficient.

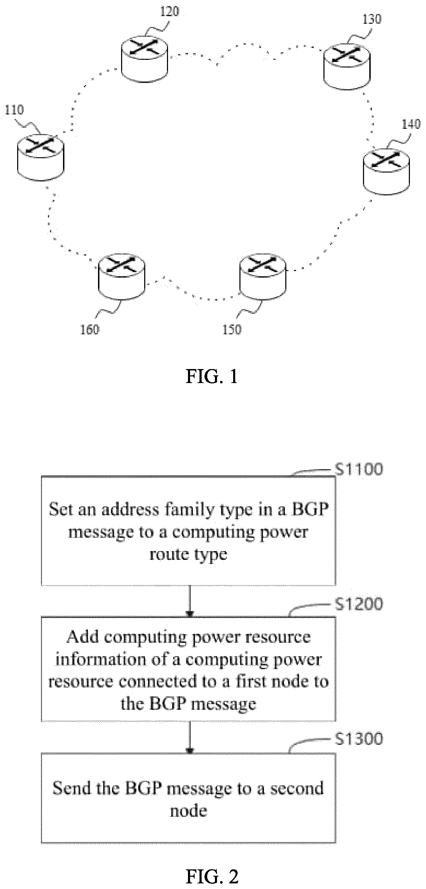

FIG. 1 is a schematic diagram of a network communication system according to an embodiment of the present disclosure. As shown in FIG. 1, in this embodiment, for example, the network communication system includes a first network device 110, a second network device 120, a third network device 130, a fourth network device 140, a fifth network device 150, and a sixth network device 160. The network devices are in communication connection with each other.

It can be understood that the number of devices and the communication relationship between devices in the network communication system of this embodiment can be expanded and changed according to an actual requirement, which is not particularly limited herein.

The technical scheme of the embodiments of the present disclosure may be applied to various communication systems, such as a computing aware network, an IP bearer network, a Wideband Code Division Multiple Access (WCDMA) mobile communication system, an Evolved Universal Terrestrial Radio Access Network (E-UTRAN) system, a Next Generation Radio Access Network (NG-RAN) system, a Long Term Evolution (LTE) system, a Worldwide Interoperability for Microwave Access (WiMAX) communication system, a 5th Generation (5G) system such as New Radio Access Technology (NR), and future communication systems such as a 6th Generation (6G) system.

The technical schemes of the embodiments of the present disclosure may be applied to various communication technologies, such as microwave communication, light wave communication, millimeter wave communication, etc. The specific technology and the specific equipment form are not limited in the embodiments of the present disclosure.

The first network device 110, the second network device 120, the third network device 130, the fourth network device 140, the fifth network device 150, and the sixth network device 160 in the embodiments of the present disclosure are collectively referred to as network devices, and may each be a network device having a communication capability. The network device may be a router, a server, a vehicle having a communication function, an intelligent vehicle, a mobile phone, a wearable device, a tablet computer (Pad), a computer with a transceiver function, a Virtual Reality (VR) device, an Augmented Reality (AR) device, a network device in industrial control, a network device in self-driving, a network device in remote medical surgery, a network device in a smart grid, a network device in transportation safety, a network device in a smart city, a network device in a smart home, a network device in an in-vehicle communication network, etc. The specific technology and the specific device form adopted by the network device are not limited in the embodiments of the present disclosure.

FIG. 2 is a flowchart of a computing power resource announcement method according to an embodiment of the present disclosure. As shown in FIG. 2, the computing power resource announcement method may be applied to, for example, but not limited to, a network device such as a router, a server, and a terminal device, or the network communication system provided in the above embodiment. In the embodiment shown in FIG. 2, the computing power resource announcement method is applied to a first node and may include, but not limited to, a plurality of following steps S1100, S1200, and S1300.

At the step S1100, an address family type in a BGP message is set to a computing power route type. A computing power route is a route corresponding to a computing power resource. A new type configured to represent the computing power route is added to types identified by an address family of the BGP message. When a BGP message carrying the address family is received, the BGP message can be identified as a computing power-related message according to a type of the address family, so as to realize the accurate announcement of computing power resources and avoid the confusion with non-computing-power routes.

In an embodiment, the BGP message includes an address family identifier (AFI) and a subsequent address family identifier (SAFI). The step S1100 includes: setting a value of the AFI to an AFI value corresponding to the computing power route type; and setting a value of the SAFI to a resource type value corresponding to a resource type of a computing power resource.

In an embodiment, the resource type of the computing power resource at least includes one of: an untyped computing power resource; a hardware-type computing power resource; or a software-type computing power resource.

An AFI value corresponding to the computing power route type is added to AFIs in the BGP message, for example, AFI=32 is set. When an AFI value in the BGP message reads 32, which indicates that the BGP message is a computing power announcement related message. It can be understood that the value of the AFI may be other unoccupied identifier values, which is not particularly limited in the present disclosure.

A SAFI value corresponding to the resource type of the computing power resource is added to SAFIs in the BGP message, to represent the resource type of the computing power resource corresponding to the computing power route.

Computing power resources may be classified into hardware resources, such as a Graphics Processing Unit (GPU), a Central Processing Unit (CPU), memory, etc., and software resources, i.e., services that can provide specific functions. Different types of computing power resources are identified by different SAFI values. For example, SAFI=10 represents an untyped computing power resource, SAFI=20 represents a hardware computing power resource, SAFI=30 represents a software computing power resource, etc. The untyped computing power resource is suitable for relatively simple networks, and hardware and software computing power resources are suitable for complex computing-aware network scenarios. It can be understood that the value of the SAFI may be other unoccupied identifier values, which is not particularly limited in the present disclosure.

It is determined according to a computing power resource identifier value of the AFI that the current BGP message is a computing power resource announcement message, and the resource type of the computing power resource carried in the current BGP message is determined according to a computing power resource type identifier value of the SAFI, so as to distinguish from other non-computing-power routes and avoid the confusion. As such, computing power resources can be announced more accurately, and the planning and management of computing power resources can be simplified.

At the step S1200, computing power resource information of a computing power resource connected to a first node is added to the BGP message.

The computing power resource information of the computing power resource connected to the first node may be computing power resource information of the first node, such as a CPU, a GPU, or other modules or devices having computing power of the first node, or may be computing power resource information of other network devices in communication connection with the first node, such as information of a server connected to the first node. It should be understood that the computing power resource information of the computing power resource connected to the first node includes information of computing power resources such as internal or external chips, modules, and devices having computing power that are in communication connection with the first node, which is not particularly limited herein.

In an embodiment, the computing power resource information includes at least one piece of computing power reachability information, which includes a computing power resource identifier type field, a computing power resource identifier length field, and a computing power resource identifier value field. Each piece of computing power reachability information corresponds to one computing power resource.

In an embodiment, the computing power resource information is added to a BGP UPDATE message, and the computing power reachability information is expressed in a Type, Length, Value (TLV) format. Type corresponds to the computing power resource identifier type field, Length corresponds to the computing power resource identifier length field, and Value corresponds to the computing power resource identifier value field.

In an embodiment, the computing power resource information includes a plurality of pieces of computing power reachability information, and each of the plurality of pieces of computing power reachability information includes a different computing power resource identifier type or computing power resource identifier value.

In an embodiment, each piece of computing power reachability information includes a different computing power resource identifier and a different computing power resource identifier value.

In another embodiment, each piece of computing power reachability information includes a different computing power resource identifier and an identical computing power resource identifier value.

In another embodiment, each piece of computing power reachability information includes an identical computing power resource identifier and a different computing power resource identifier value.

With the setting of the computing power resource identifier and the computing power resource identifier value, if one of the two is different, the computing power reachability information can be distinguished, making the configuration of the computing power resource identifier values more flexible and simplifying the planning and management of computing power resources.

In an embodiment, the computing power resource identifier type at least includes one of: a numerical type; an IPv4 address type; an IPv6 address type; or an MPLS type. The numerical type means that a numerical value is directly used as the computing power resource identifier. The IPv4 address type means that an IPv4 address is used as the computing power resource identifier. The IPv6 address type means that an IPv6 address is used as the computing power resource identifier. The MPLS type means that a numerical value generated by an MPLS technology is used as the computing power resource identifier. Since an AFI value that can identify the BGP message as a computing power type is set in the BGP message, the BGP message can be distinguished from non-computing-power routes, and IPv4 addresses and IPv6 addresses can be reused.

It can be understood that in order to be compatible with deployment scenarios with different types of computing power resource identifiers, computing power resources corresponding to the different types of computing power resource identifiers may be announced together.

In an embodiment, the computing power resource identifier type is the numerical type, and the computing power resource identifier length corresponding to the computing power resource identifier type at least includes one of: 32 bits, 64 bits, 128 bits, 256 bits, or 512 bits. It can be understood that the computing power resource identifier length may be set according to the number of computing power resources, i.e., the number of numerical computing power resource identifiers. When the number of numerical computing power resource identifiers is small, a short computing power resource identifier length may be set. When the number of numerical computing power resource identifiers is large, a long computing power resource identifier length may be set. The computing power resource identifier length is not particularly limited in the present disclosure.

In an embodiment, the computing power resource information includes a computing power resource attribute, which includes at least one of: the number of the computing power resources; or a unit of the computing power resources. In some scenarios, e.g., a computing power transaction scenario, computing power resource announcement may not involve announcement of computing power resource identifiers, but only includes announcement of the type and number of computing power resources. In this case, the computing power resource information includes a computing power resource attribute, which includes the number of computing power resources and the unit of the computing power resources. The number of computing power resources is aggregated computing power of computing power resources having the identical type, and the unit of the computing power resource is a computing power unit of the corresponding type of computing power resource.

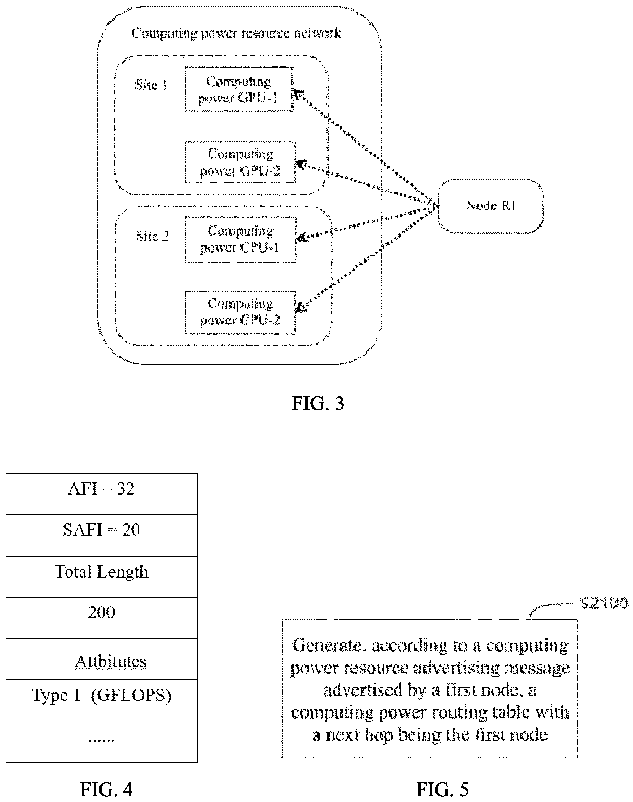

For example, FIG. 3 is a schematic diagram of a node R1 and a computing power resource network connected to the node R1 according to an example of the present disclosure. As shown in FIG. 3, the computing-aware network connected to the node R1 includes a computing power GPU-1, a computing power GPU-2, a computing power CPU-1, and a computing power CPU-2, and the node R1 is respectively in communication connection with the computing power GPU-1, the computing power GPU-2, the computing power CPU-1, and the computing power CPU-2. The node R1 may package and announce the connected computing power GPU-1 and computing power GPU-2, and may also package and announce service capabilities that the computing power CPU-1 and the computing power CPU-2 can support. In this case, the node R1 does not need to separately announce computing power resource identifiers of each GPU and CPU, but instead, advertises the computing power resources, but through a BGP message carrying a SAFI corresponding to a hardware computing power resource, an AFI corresponding to a computing power resource type, and a corresponding computing power resource attribute. Assuming that the GPUs connected to the node R1 together can provide a computing power resource of 200 Giga Floating-point Operations Per Second (GFLOPS), the BGP message is as shown in FIG. 4, where AFI=32 indicates that the message type is a computing power resource type, SAFI=20 indicates a hardware computing power resource, Total Length indicates the length of subsequent content carried, 200 indicates the level of capability of the announced computing power resource, and Type 1 (GFLOPS) represents a unit of the computing power resource.

Software computing power resources may also be announced in the above manner. Assuming that the CPUs connected to the node R1 can provide services such as graphics computing or artificial intelligence computing to the outside, a BGP message with AFI=32 and SAFI=30 may be used for announcement. AFI=32 indicates that the message type is a computing power resource type, and SAFI=30 indicates a software computing power resource. The BGP message carries computing power resource attributes, to which the corresponding number of computing power resources and the unit of the computing power resource are respectively written.

It can be understood that, in some other examples, hardware computing power resources may also include other hardware having a computing capability such as a memory. Similarly, in order to announce such hardware computing power resources, different units of computing power resources are carried in the computing power resource attribute to distinguish different types. If the computing power resource is a memory which is 300, the number of computing power resources is set to 300, and the unit of the computing power resource is set to TB in the corresponding computing power resource attribute.

In an embodiment, the method further includes: adding a computing power encapsulation type to the BGP message, where the computing power encapsulation type is used to indicate an encapsulation type used by computing power traffic.

In an embodiment, the encapsulation type at least includes one of: an IPv4 type; an IPv6 type; an MPLS type; an IPv6-based Segment Routing type; or a Bit Index Explicit Replication (BIER) type. The encapsulation type includes, but not limited to, IPv4, IPv6, MPLS, Segment Routing IPv6 (SRv6), BIER, and the like.

In an embodiment, the computing power resource announcement method further includes: adding a computing power extended community attribute to the BGP message, where the computing power extended community attribute is used to carry computing power site information. For example, the computing power extended community attribute information includes computing power site information. The computing power sites formed by multiple computing power resources are announced through the setting of the computing power extended community attribute, thereby specifying the range of computing power resources, simplifying the allocation of computing power resource identifiers and reducing the difficulty in planning and managing computing power resources.

For example, the node R1 shown in FIG. 3 is used as an example. As shown in FIG. 3, the computing power GPU-1 and the computing power GPU-2 connected to the node R1 belong to a computing power site 1, and the computing power CPU-1 and the computing power CPU-2 belong to a computing power site 2. When the computing power resources of the computing power site 1 are announced, the BGP message includes computing power resource information corresponding to the computing power GPU-1 and the computing power GPU-2, and the computing power site information is carried in the computing power extended community attribute to indicate that the computing power GPU-1 and the computing power GPU-2 in the current BGP message belong to the computing power site 1. When the computing power resources of the computing power site 2 are announced, the BGP message includes computing power resource information corresponding to the computing power CPU-1 and the computing power CPU-2, and the computing power site information is carried in the computing power extended community attribute to indicate that the computing power CPU-1 and the computing power CPU-2 in the current BGP message belong to the computing power site 2. Because the various resources belong to different computing power sites and there is a computing power extended community attribute configured to distinguish the computing power sites, the allocation of computing power resource identifiers may be performed based on the computing power sites. For example, computing power resource identifiers of 1 and 2 are respectively allocated to GPU-1 and GPU-2 in the computing power site 1, and computing power resource identifiers of 1 and 2 may also be respectively allocated to CPU-1 and CPU-2 in the computing power site 2. Therefore, the identical computing power resource identifier value can be set for computing power resources of different sites without affecting the accurate identification and announcement of computing power resources, thereby simplifying the allocation of computing power resource identifiers.

At the step S1300, the BGP message is sent to a second node.

When a neighbor node performs link establishment, the first node sends a BGP message to the neighbor node, where the BGP message is an OPEN message carrying an AFI value representing a computing power resource type and a SAFI value representing a resource type of a computing power resource. The first node performs capability announcement to the neighbor node through the OPEN message to inform the neighbor node that the first node has a computing power resource announcement capability. At the same time, the first node receives an OPEN message from the neighbor node to determine whether the neighbor node has the computing power resource announcement capability.

After the link establishment is completed, the first node sends the BGP message to the neighbor node having the computing power resource announcement capability, where the BGP message is an UPDATE message carrying an AFI value representing a computing power route type, a SAFI value representing a resource type of a computing power resource, and computing power resource information of a computing power resource connected to the first node. The first node performs computing power resource announcement to the neighbor node through the UPDATE message. When performing computing power resource announcement through the UPDATE message, the first node sends the UPDAET message only to the neighbor node having the computing power resource notification capability. This prevents neighbor nodes that do not have the computing power resource notification capability from receiving computing power traffic that the neighbor nodes do not support, which otherwise leads to processing errors. It can be understood that the second node and the neighbor node can be used interchangeably herein.

In an embodiment, the BGP message is an update message; and the method further includes: setting a next hop attribute to a loopback address of the first node; and adding the next hop attribute to the update message. The loopback address is used as an identifier of a corresponding node. For example, the loopback address of the first node may be used as an identifier of the first node.

FIG. 5 is a flowchart of a routing table establishment method according to an embodiment of the present disclosure. As shown in FIG. 5, the routing table establishment method may be applied to, for example, but not limited to, a network device such as a router, a server, and a terminal device, or the network communication system provided in the above embodiment. In the embodiment shown in FIG. 2, the routing table establishment method is applied to a second node and may include, but not limited to, a following step S2100.

At the step S2100, according to a computing power resource announcement message announced by a first node, a computing power routing table with a next hop being the first node is generated, where the computing power resource announcement message is obtained according to the computing power resource announcement method of any embodiment.

The first node announces computing power resource-related information such as computing power reachability information, computing power encapsulation type information, and computing power extended community attribute information through a BGP message according to a requirement. After receiving the BGP message, each neighbor node having the computing power resource announcement capability forms a computing power routing table, and selects an encapsulation mode for computing power traffic. A next hop in the computing power routing table may be an IP address of a service site providing a computing power resource, or may be an IP address of a BGP device connected to the service site providing the computing power resource.

It can be understood that, in the present disclosure, the first node represents a node that performs computing power resource announcement to a neighbor node, the second node represents a neighbor node that receives the computing power resources announcement from another node, and each node in the identical network may serve as a first node and a second node at the same time.

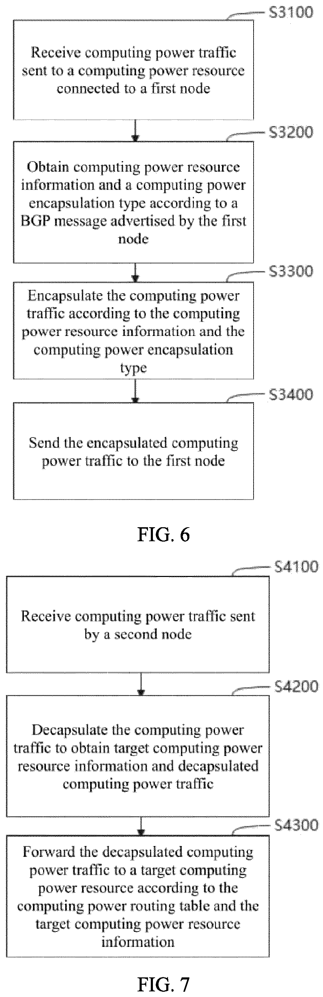

FIG. 6 is a flowchart of a computing power traffic processing method according to an embodiment of the present disclosure. As shown in FIG. 6, the computing power traffic processing method may be applied to, for example, but not limited to, a network device such as a router, a server, and a terminal device, or the network communication system provided in the above embodiment. In the embodiment shown in FIG. 2, the computing power traffic processing method is applied to a second node and may include, but not limited to, a plurality of following steps S3100, S3200, S3300, and S3400.

At the step S3100, computing power traffic sent to a computing power resource connected to a first node is received.

The second node receives the computing power traffic, determines a target computing power resource of the computing power traffic according to a requirement of a configuration or a controller or orchestrator, and checks a computing power routing table. If the target computing power resource of the computing power traffic is in a computing power resource network connected to the second node, the second node directly forwards the computing power traffic to the corresponding target computing power resource for processing. If the target computing power resource of the computing power traffic is on a remote device spanning multiple terminal devices, i.e., in a computing power resource network connected to another node, e.g., in a computing power resource network connected to the first node, the second node has to encapsulate the computing power traffic and then sends the encapsulated computing power traffic to a target node.

At the step S3200, computing power resource information and a computing power encapsulation type are obtained according to a BGP message announced by the first node. The second node firstly establishes a computing power routing table according to the BGP message announced by the first node. After receiving the computing power traffic of which the target computing power resource is in the computing power resource network connected to the first node, the second node acquires computing power resource information of the first node and a computing power encapsulation type from the computing power routing table.

At the step S3300, the computing power traffic is encapsulated according to the computing power resource information and the computing power encapsulation type. The second node encapsulates the computing power traffic according to the acquired computing power resource information of the first node and the computing power encapsulation type.

In an embodiment, encapsulating the computing power traffic includes at least one of: performing a computing power header encapsulation and an outer layer encapsulation on the computing power traffic; or performing the outer layer encapsulation on the computing power traffic.

In an embodiment, in some scenarios, such as that where the encapsulation type indicated by the computing power encapsulation type is SRv6, the computing power header encapsulation on the computing power traffic is omitted, and only the outer layer encapsulation is performed on the computing power traffic.

In an embodiment, performing the computing power header encapsulation and the outer layer encapsulation on the computing power traffic includes: encapsulating at least one of a computing power resource identifier or a second node identifier carried in the computing power resource information in a computing power header; and performing the outer layer encapsulation on the computing power traffic according to an encapsulation type indicated by the computing power encapsulation type. For example, the second node identifier is a loopback address of the second node.

It can be understood that in the embodiments related to the computing power traffic processing method, specific details corresponding to the computing power resource information and the computing power encapsulation type correspond to those in the embodiments of the computing power resource announcement method, which will not be described in detail herein again.

In an embodiment, the computing power header encapsulation includes a target computing power resource identifier, an encapsulation node identifier, and related information. The target computing power resource identifier is a computing power resource identifier carried in the computing power resource information corresponding to the first node. The encapsulation node identifier is the second node identifier, i.e., information of the node performing computing power encapsulation. Further, when the node performing the computing power encapsulation has a computing power resource identifier, the corresponding encapsulation node identifier may be in an identical format as the target computing power resource identifier.

In an embodiment, a destination IP address of the computing power traffic is set to a loopback address of the first node (target node) for outer layer encapsulation of the computing power traffic.

In an embodiment, performing the outer layer encapsulation on the computing power traffic includes: when the encapsulation type indicated by the computing power encapsulation type is SRv6, encapsulating the computing power resource identifier as a parameter into a last segment in a Segment List corresponding to the encapsulation type.

In an embodiment, the computing power header includes computing power site information. When the target computing power resource belongs to a computing power site, computing power site information corresponding to the target computing power resource also needs to be encapsulated during the computing power header encapsulation.

At the step S3400, the encapsulated computing power traffic is sent to the first node, where the BGP message is obtained according to the computing power resource announcement method of the above embodiments. The second node sends the encapsulated computing power traffic to the first node. After receiving the encapsulated computing power traffic, the first node decapsulates the encapsulated computing power traffic according to an indication of a computing power routing table of the first node, and then forwards the computing power traffic to a corresponding computing power resource in the computing power resource network connected to the first node for processing.

FIG. 7 is a flowchart of a computing power traffic processing method according to another embodiment of the present disclosure. As shown in FIG. 7, the computing power traffic processing method may be applied to, for example, but not limited to, a network device such as a router, a server, and a terminal device, or the network communication system provided in the above embodiment. In the embodiment shown in FIG. 7, the computing power traffic processing method is applied to a first node and may include, but not limited to, a plurality of following steps S4100, S4200, and S4300.

At the step S4100, computing power traffic sent by a second node is received, where the computing power traffic is obtained according to the computing power traffic processing method provided in the above embodiments. The first node receives encapsulated computing power traffic sent by the second node.

At the step S4200, the computing power traffic is decapsulated to obtain target computing power resource information and decapsulated computing power traffic. The first node decapsulates the encapsulated computing power traffic to obtain target computing power resource information and decapsulated computing power traffic.

In an embodiment, the target computing power resource information includes a computing power resource identifier.

In an embodiment, the target computing power resource information includes a computing power site identifier.

At the step S4300, the decapsulated computing power traffic is forwarded to a target computing power resource according to the computing power routing table and the target computing power resource information. According to the computing power routing table of the first node and the target computing power resource information, the first node forwards the decapsulated computing power traffic to the corresponding target computing power resource in the computing power resource network connected to the first node for processing.

In an embodiment, when the target computing power resource information includes a computing power resource identifier, the first node forwards the decapsulated computing power traffic to a computing power resource corresponding to the computing power resource identifier for processing.

In an embodiment, when the target computing power resource information includes a computing power site identifier, the first node forwards the decapsulated computing power traffic to a computing power site corresponding to the computing power site identifier, so that a computing power resource in the computing power site processes the decapsulated computing power traffic.

It can be understood that in the embodiments related to the computing power traffic processing method, the first node represents a target node of the computing power traffic, the second node represents a node that encapsulates and sends the computing power traffic, there may be one or more first nodes, and there may also be one or more second nodes, which is not particularly limited in the present disclosure.

In order to further illustrate the computing power resource announcement method, the routing table establishment method, and the computing power traffic processing method provided in the embodiments of the present disclosure, a detailed description is given below through the following examples.

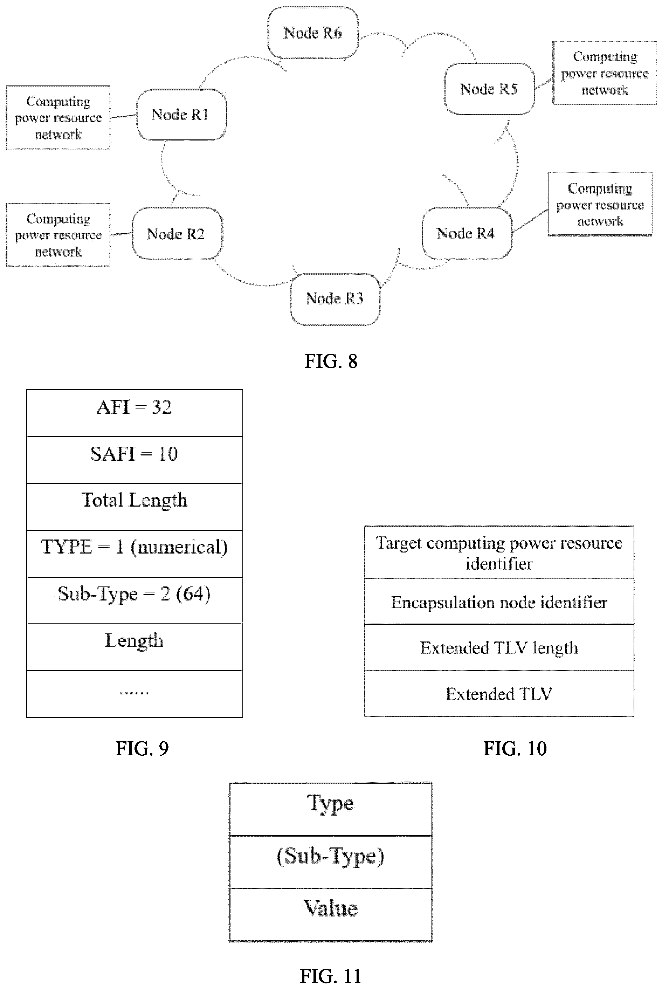

FIG. 8 is a schematic diagram of a BGP network system according to an example of the present disclosure. As shown in FIG. 8, the network includes a node R1, a node R2, a node R3, a node R4, a node R5, and a node R6. Each of the node R1, the node R2, the node R4, and the node R5 has a corresponding computing power resource network connected thereto.

### Example one:

In the network shown in FIG. 8, the node R1, the node R2, the node R4, and the node R5 all support computing power routing and serve as computing power gateway devices to respectively connect to their corresponding computing power resource networks. The node R1, the node R2, the node R3, the node R4, the node R5, and the node R6 form a BGP-based MESH network. The node R1/node R2/node R4/node R5 adds computing power announcement to a BGP OPEN message, which is specifically expressed as follows.

In the OPEN message, a value of a capability code is 1, indicating Multiprotocol BGP, and the capability code of 1 is followed by values of an AFI and a SAFI that represent computing power. It is assumed that the value of the AFI representing the computing power is 32. The SAFI represents the computing power resource type. When announcement of an untyped computing power resource is supported, the SAFI may be set to 10. When announcement of a hardware computing power resource is supported, the SAFI may be set to 20. When announcement of a software computing power resource is supported, the SAFI may be set to 30. It can be understood that the values of the AFI and the SAFI are merely examples and are not intended to limit the present disclosure.

After each node performs capability announcement, each node also learns of capabilities of other nodes. For example, the node R1 can learn that the node R2, the node R4, and the node R5 all have the computing power resource announcement capability, but the node R3 and the node R6 do not have this capability. Therefore, the node R1 performs computing power resource announcement only to the node R2, the node R4 and the node R5, but not to the node R3 and the node R6, thereby avoiding processing errors caused by the node R3 and the node R6 receiving computing power traffic that they cannot support. In addition, the node R2, the node R4, and the node R5 may learn the computing power resource type supported by the node R1 according to the SAFI value announced by the node R1. A controller or orchestrator in the network is able to acquire information of all computing power resources in the network as long as the controller or orchestrator is connected to any one of the node R1, the node R2, the node R4, and the node R5.

As shown in FIG. 3, computing power resources connected to the node R1 include a GPU and a CPU. The computing power resources shown in FIG. 3 may be located on one device or distributed on multiple devices. It is assumed that the computing power resources can directly provide computing power services to the outside, so it is necessary to announce identifiers of the computing power resources to the outside. It is assumed that the computing power resources are each distinguished by a 64-bit identifier. For example, the computing power GPU-1 is represented by 1, the computing power GPU-2 is represented by 2, the computing power CPU-1 is represented by 3, and the computing power CPU-2 is represented by 4. The node R1 performs computing power resource announcement according to a 64-bit numerical computing power resource identifier, as shown in FIG. 9.

For example, as shown in FIG. 9, when the node R1 performs computing power resource announcement using a BGP UPDATE message to announce the computing power resource, the UPDATE message carries an AFI and a SAFI that represent computing power, where AFI=32 indicates that the message is a computing power resource announcement message, and SAFI=10 indicates that the computing power resource is an untyped computing power resource. Total Length carries information of the total length of the message. After the SAFI, a TLV format is used to represent a specific computing power resource identifier type and value. In FIG. 9, Type = 1 indicates a numerical computing power resource identifier, Sub-Type represents the length of the value of the specific computing power resource identifier, Sub-Type = 2 may indicate that the length of the corresponding computing power resource identifier is 64 bits (Sub-Type = 1 may indicate that the length of the corresponding computing power resource identifier is 32 bits, Sub-Type = 3 may indicate that the length of the corresponding computing power resource identifier is 128 bits, and so on), Sub-Type is followed by Length, which represents a sum of the lengths of the specific computing power resource identifiers. Length represents the sum of the lengths of the identifiers of all computing power resources corresponding to Sub-Type. In this example, the node R1 is connected to computing power resources 1 to 4, so the sum of the lengths of identifiers of the computing power resources is 4 × 64 bits, i.e., 32 bytes (1 byte=8 bits). Length is followed by specific computing power resource identifier values of the four computing power resources.

When the computing power resources of the node R1 are announced, the BGP UPDATE message also needs to carry a next hop (NEXT-HOP) attribute, where a value in the NEXT-HOP attribute is set to a loopback address of the node R1 (which usually may also be an address for BGP neighbor establishment); and it may optionally carry a computing power resource attribute value. The computing power resource attribute includes the number of computing power resources and the unit of the computing power resource, and the computing power resource attribute value may be used by the controller or orchestrator as a metric of computing power.

Thus, the node R1 can complete the announcement of the computing power resource and generate a local computing power routing and forwarding table that points to the computing power resources. As shown in FIG. 3, the node R1 is connected to the computing power GPU-1, the computing power GPU-2, the computing power CPU-1, and the computing power CPU-2 through different interfaces. When a computing power resource is revoked, for example, the computing power GPU-2 in FIG. 3 is no longer available and can no longer provide a computing power service, the node R1 sends a new UPDATE message to withdraw a route corresponding to the computing power resource identifier of the computing power GPU-2. For the format of the new UPDATE message, reference may be made to the above format in this example. The difference between the new UPDATE message and the above UPDATE message only lies in that the new UPDATE message is sent only in the withdrawn route of the BGP.

After receiving the announcement from the node R1, other nodes such as the node R2, the node R4, and the node R5 respectively establish a computing power routing table with a next hop being the node R1, where the content of the computing power routing table is the node R1 corresponding to the computing power resource identifiers 1 to 4.

The AFI and the SAFI are set to identify the computing power resource announcement message and the resource type of the computing power resource, and the numerical computing power resource identifier is used, so that existing addresses such as IPv4 and IPv6 addresses can be reused while avoiding confusion with announcement of non-computing-power messages, and accurate computing power resource announcement can be implemented. In addition, the numerical computing power resource identifiers are used to replace IPv4 and IPv6 addresses for identification, thereby saving the limited IPv4 and IPv6 addresses simplifying the planning and management of computing power resources, and making the announcement of computing power resources simpler and more efficient.

### Example two:

The encapsulation process of computing power traffic is further described using the node R2 as an example. It is assumed that the node R2 receives the computing power traffic, and determines according to a requirement of the configuration (or the controller or orchestrator) that the computing power traffic needs to be sent to a node having a computing power resource identifier of 3 (i.e., the computing power CPU-1 connected to the node R1). In this case, the node R2 first encapsulates a computing power header for the computing power traffic. As shown in FIG. 10, the computing power header includes a target computing power resource identifier, an encapsulation node identifier, an extended TLV length, an extended TLV. The structures of the target computing power resource identifier and the encapsulation node identifier may be as shown in FIG. 11, i.e., Type, Sub-Type, and Value. Type represents the type of computing power resource identifier, which is consistent with the previously announced computing power resource identifier. If the computing power resource identifier is numerical, Type is set to 1. Sub-Type is set to 2, indicating that the length of the computing power resource identifier is 64 bits. Value is 3, which represents the computing power resource identifier value of the computing power CPU-1.

The encapsulation node identifier corresponds to information of the node implementing computing power encapsulation, i.e., the node R2. The node R2 may be represented by its loopback address. The encapsulation node identifier may share an identical structure with the target computing power resource identifier. It is assumed that the loopback address of the node R2 is used as the encapsulation node identifier, and when the loopback address is an IPv6 address, Type is set to 3 (where a numerical computing power resource identifier is represented by 1, an IPv4 address type computing power resource identifier is represented by 2, an IPv6 address Type computing power resource identifier is represented by 3, an MPLS label type computing power resource identifier is represented by 4, etc., and the values of the identifiers are merely examples, and may vary in practice). Because the IPv6 address has a fixed length of 128 bits, there is no need to set the Sub-Type identifier, and the loopback address of the node R2 is directly set in Value.

After the computing power header encapsulation is completed, the outer layer encapsulation is performed. A destination IP address of the outer layer encapsulation is set to the loopback address of the node R1, and a Next Header field of the outer layer encapsulation is set to a value indicating computing power traffic, e.g., 160. Therefore, the computing power traffic can be forwarded to the node R1 through the network, and intermediate nodes in the network only forward the computing power traffic according to the destination IP address encapsulated in the outermost layer, and does not process the carried computing power traffic. When processing this packet, the node R1 identifies the computing power header according to the Next Header value of 160 in the outer layer encapsulation, and further determines according to the target computing power resource identifier in the computing power header that the traffic needs to be sent to a computing power resource having a "computing power resource identifier" of 3. Therefore, after removing the outer layer encapsulation and the computing power header encapsulation, the node R1 forwards the decapsulated computing power traffic to the computing power CPU-1 for processing.

By encapsulating and sending the computing power traffic according to the information related to the target computing power resource, the computing power traffic is efficiently and accurately sent to the corresponding computing power resource for processing, thereby improving the efficiency of processing the computing power traffic.

### Example three:

In the present disclosure, a transmission channel may further be specified by a BGP path attribute. For example, when performing computing power resource announcement, the node R1 hopes that other nodes can send computing power traffic in the form of SRv6 encapsulation. Therefore, when the node R1 performs computing power resource announcement, not only computing power reachability information is carried, but also a path attribute representing SRv6 encapsulation is carried. After receiving the announcement from the node R1, the node R2, the node R4, and the node R5 perform the outer layer encapsulation on the computing power traffic by using SRv6 encapsulation and sends the encapsulated computing power traffic to the node R1.

For example, when the node R2 finds that computing power traffic needs to be sent to the computing power GPU-1 connected to the node R1 for processing, the node R2 also finds that the node R1 has specified an SRv6 encapsulation type.

In this case, the node R2 may perform the encapsulation of the computing power header first and then encapsulates an outer SRv6 header, as described in Example 2. Alternatively, the node R2 may directly encapsulate the target computing power resource identifier into a last segment in a Segment List of SRv6 as an argument without encapsulating the computing power header, and set the lower 64 bits of the segment as the target computing power resource identifier. For SRv6 encapsulation, reference may be made to the description in RFC8754, and the details will not be repeated herein. Therefore, the computing power traffic can be forwarded segment by segment through SRv6, and finally reaches the node R1. The node R1 reads the last segment of the Segment List in SRv6 to obtain the target computing power resource identifier, searches the local computing power routing table, and sends the computing power traffic to the computing power GPU-1.

It can be understood that SRv6 is merely an outer layer encapsulation method in the examples of the present disclosure. Depending on the actual deployment, the outer layer encapsulation methods such as IPv4/IPv6, MPLS, and BIER may also be used. The encapsulation type to be used may be specified in the BGP path attribute. The present disclosure is not limited to the encapsulation types described above, and more encapsulation types may be introduced according to an actual deployment situation.

### Example four:

Based on Example one, in some computing power resource networks, the computing power resources to which IP addresses have been allocated coexist with the computing power resources to which only numerical computing power resource identifiers are allocated.

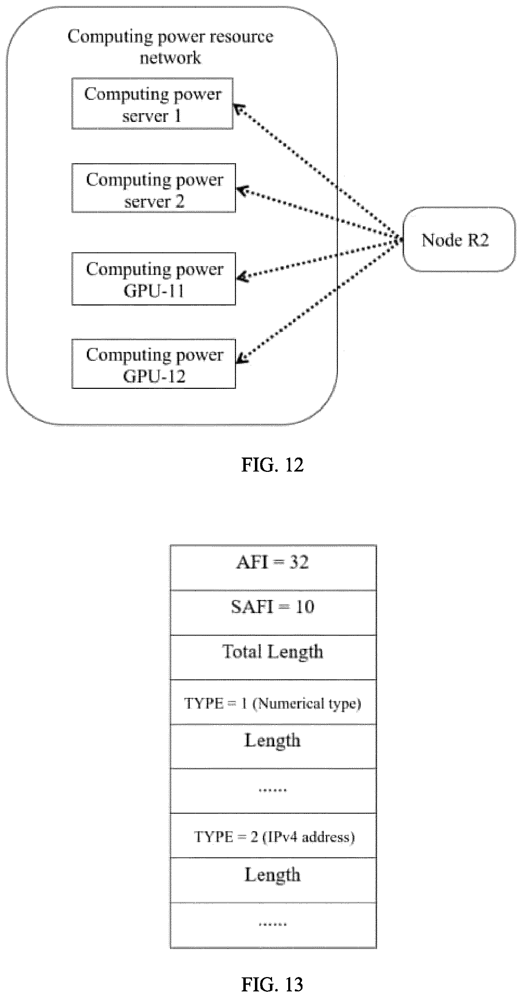

FIG. 12 is a schematic diagram of a node R2 and a computing power resource network connected to the node R2 according to an example of the present disclosure. As shown in FIG. 12, in the computing power resource network connected to the node R2, the computing power server 1 and the computing power server 2 have been assigned IPv4 addresses, but the computing power GPU-11 and the computing power GPU-12 have no IP address, but are assigned computing power resource identifiers. It is assumed that the computing power resource identifier of the computing power GPU-11 is 11, and the computing power resource identifier of the computing power GPU-12 is 12.

When the node R2 announces its computing power resources to the node R1, the node R4, and the node R5, the node R2 has to announce the two types of computing power resource identifiers together. A structure of a computing power resource announcement message of the node R2 is shown in FIG. 13, where Total Length following the AFI and the SAFI represents the length of all computing power reachability information. After numerical computing power resource identifiers are encapsulated, the computing power resource identifiers of IP address type are encapsulated. As shown in FIG. 13, TYPE=1 represents the numerical computing power resource identifier, and it is followed by Length which represents the sum of the lengths of all numerical computing power resource identifiers, and specific values of the computing power resource identifiers corresponding to the computing power GPU-11 and the computing power GPU-12 of the node R2. TYPE=2 represents the IPv4 address type computing power resource identifier, and it is followed by Length which represents the sum of the lengths of all IPv4 address type computing power resource identifiers, and specific values of the computing power resource identifiers corresponding to the computing power server 1 and the computing power server 2 of the node R2.

For example, TYPE=2 represents the IPv4 address type computing power resource identifier, and the node R2 has to announce IPv4 addresses of the computing power server 1 and the computing power server 2. Therefore, the value of Length following TYPE=2 is equal to 8 bytes, indicating that there are two IPv4 addresses following the Length field. Other processes are the same as those in Example one, so the details will not be repeated herein.

After receiving the announcement from the node R2, the node R1, the node R4, and the node R5 respectively establish a local computing power routing table, and distinguish whether the computing power resource is the numerical type or the IPv4 address type according to the computing power resource type (TYPE).

It can be understood that if an address of a computing power server is an IPv6 address or other types of addresses, the computing power resource announcement method in this example may also be used, so as to ensure that accurate computing power resource announcement can be implemented in a scenario where different types of computing power resources are deployed.

### Example five:

For example, as shown in FIG. 3, the computing power GPU-1 and the computing power GPU-2 connected to the node R1 belong to a computing power site 1, and the computing power CPU-1 and the computing power CPU-2 connected to the node R1 belong to a computing power site 2. When the node R1 performs computing power resource announcement, the computing power extended community attribute may be used to carry computing power site information. That is, when performing computing power resource announcement, the node R1 announces the computing power resource identifiers of computing power GPU-1 and computing power GPU-2, and the computing power extended community attribute carries information of the computing power site 1 which announce that the computing power GPU-1 and the computing power GPU-2 belong to the computing power site 1. When the computing power resources of the computing power CPU-1 and the computing power CPU-2 are announced, the computing power extended community attribute carries information of the computing power site to announce that the computing power CPU-1 and the computing power CPU-2 belong to the computing power site 2. Because the various resources belong to different computing power sites, the allocation of computing power resource identifiers may be performed based on the computing power sites. For example, computing power identifiers of 1 and 2 are respectively allocated to the computing power GPU-1 and the computing power GPU-2 in the computing power site 1, and computing power identifiers of 1 and 2 are also respectively allocated to the computing power CPU-1 and the computing power CPU-2 in the computing power site 2. Through the above setting, the computing power resource identifiers can be reused while ensuring the accuracy of announcement, thereby simplifying the planning and management of computing power resources.

After the node R2, the node R4, and the node R5 receive the announcement from the node R1, the node R1, the node R2, the node R4, and the node R5 each establish two computing power routing tables respectively for the computing power site 1 and the computing power site 2.

After receiving computing power traffic, the node R2 determines according to a requirement of the configuration (or the controller or orchestrator) that the computing power traffic needs to be sent to the computing power GPU-1 in the computing power site 1 connected to the node R1 for processing. In this case, when the node R2 encapsulates a computing power header, the target computing power resource identifier and the encapsulation node identifier are added with reference to Example 2. The subsequent extended TLV length is set to the total length of TLV to be carried. In the extended TLV, Type is set to a value representing the computing power site, e.g., 100, Length is set to 1 byte (where the specific value of Length is set according to the number of computing power sites, and Length is set to 1 byte based on an assumption that the number of computing power sites does not exceed 255), and Value is set to the computing power site identifier value of 1. For the outer layer encapsulation, reference may be made to Example two or Example three, and the details will not be described herein again.

After receiving the computing power traffic, the node R1 decapsulates the computing power header. If it is found that the computing power header carries the computing power site identifier value of 1, it means that the computing power traffic needs to be sent to a computing power resource of the computing power site 1 for processing. In this case, the node R1 retrieves the computing power routing table corresponding to the computing power site 1, and sends the computing power traffic to the computing power GPU-1 for processing, thereby specifying the range of computing power resources, and simplifying the allocation of computing power resource identifiers.

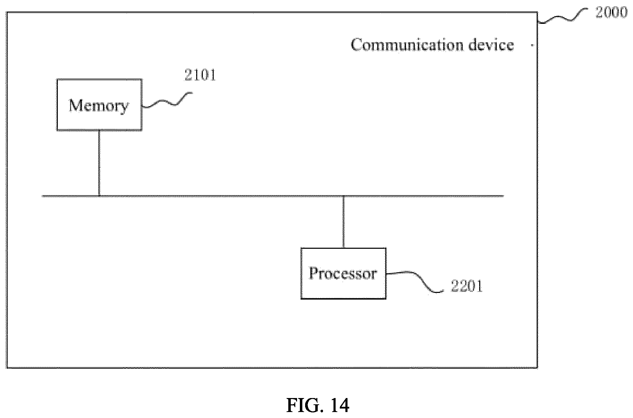

FIG. 14 is a schematic structural diagram of a communication device according to an embodiment of the present disclosure. As shown in FIG. 14, the communication device 2000 includes a memory 2100 and a processor 2200. The device may include one or more memories 2100 and one or more processors 2200. FIG. 14 uses one memory 2101 and one processor 2201 as an example. The memory 2101 and the processor 2201 in the communication device may be connected by a bus or in other ways. Connection by a bus is used as an example in FIG. 14.

The memory 2101, as a computer-readable storage medium, may be configured to store a software program, a computer-executable program, and a module, for example, program instructions/modules corresponding to the method provided in any embodiment of the present disclosure. The processor 2201 runs the software program, instructions, and modules stored in the memory 2101, to implement the method provided in any one of the above embodiments.

The memory 2101 may mainly include a program storage area and a data storage area. The program storage area may store an operating system, and an application required by at least one function. In addition, the memory 2101 may include a high-speed random access memory, and may also include a nonvolatile memory, e.g., at least one magnetic disk storage device, flash memory device, or other nonvolatile solid-state storage device. In some examples, the memory 2101 further includes a memory located remotely from the processor 2201, and the remote memory may be connected to the device via a network. Examples of the network include, but not limited to, the Internet, an intranet, a local area network, a mobile communication network, and combinations thereof.

An embodiment of the present disclosure provides a computer-readable storage medium storing a computer-executable instruction which, when executed by a processor, causes the processor to implement the computing power resource announcement method, the routing table establishment method, or the computing power traffic processing method provided in any embodiment of the present disclosure.

An embodiment of the present disclosure provides a computer program product, including a computer program or a computer instruction stored in a computer-readable storage medium, where the computer program or a computer instruction, when read from the computer-readable storage medium and executed by a processor of a computer device, causes the computer device to implement the computing power resource announcement method, the routing table establishment method, or the computing power traffic processing method provided in any embodiment of the present disclosure.

The system architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new application scenarios, the technical schemes provided in the embodiments of the present disclosure are also applicable to similar technical problems.

The system architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new application scenarios, the technical schemes provided in the embodiments of the present disclosure are also applicable to similar technical problems.

Those having ordinary skills in the art can understand that all or some of the steps in the methods disclosed above and the functional modules/units in the system and the apparatus can be implemented as software, firmware, hardware, and appropriate combinations thereof.

In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

As used in this description, the terms "component," "module," "system," and the like are used to denote computer-related entities, hardware, firmware, a combination of hardware and software, software, or software in execution. For example, a component may be, but not limited to, a process running on a processor, a processor, an object, an executable file, a thread of execution, a program, or a computer. An application running on a computing device and the computing device may both be illustrated as components. One or more components may reside in a process or thread of execution. A component may be located on one computer or distributed on two or more computers. In addition, the components may be executed from various computer-readable media having various data structures stored therein. The components may communicate via local and/or remote processes such as in accordance with a signal having one or more data packets (e.g., data from one component interacting with another component in a local system, distributed system, and/or across a network such as the Internet with other systems via the signal).

## Claims

1. A computing power resource announcement method, applied to a first node, the method comprising:
setting an address family type in a Border Gateway Protocol, BGP, message to a computing power route type, wherein a computing power route is a route corresponding to a computing power resource;
adding computing power resource information of a computing power resource connected to a first node to the BGP message; and
sending the BGP message to a second node.

2. The computing power resource announcement method of claim 1, wherein the computing power resource information comprises at least one piece of computing power reachability information, which comprises a computing power resource identifier type field, a computing power resource identifier length field, and a computing power resource identifier value field.

3. The computing power resource announcement method of claim 2, wherein the computing power resource information comprises a plurality of pieces of computing power reachability information, and each of the plurality of pieces of computing power reachability information comprises a different computing power resource identifier type or a different computing power resource identifier value.

4. The computing power resource announcement method of claim 2, wherein the computing power resource identifier type at least comprises one of:
a numerical type;
an Internet Protocol version 4, IPv4, address type;
an Internet Protocol version 6, IPv6, address type; or
a Multiprotocol Label Switching, MPLS, type.

5. The computing power resource announcement method of claim 4, wherein in response to the computing power resource identifier type being the numerical type, the computing power resource identifier length corresponding to the computing power resource identifier type at least comprises one of:
32 bits, 64 bits, 128 bits, 256 bits, or 512 bits.

6. The computing power resource announcement method of claim 1, wherein the computing power resource information comprises a computing power resource attribute, and the computing power resource attribute comprises at least one of:
the number of computing power resources; or
a unit of a computing power resource.

7. The computing power resource announcement method of claim 1, further comprising:
adding a computing power encapsulation type to the BGP message, wherein the computing power encapsulation type is configured to indicate an encapsulation type used by computing power traffic.

8. The computing power resource announcement method of claim 7, wherein the encapsulation type at least comprises one of:
an IPv4 type;
an IPv6 type;
a MPLS type;
an IPv6-based Segment Routing type; or
a Bit Index Explicit Replication, BIER, type.

9. The computing power resource announcement method of claim 1, further comprising:
adding a computing power extended community attribute to the BGP message, wherein the computing power extended community attribute is configured to carry computing power site information.

10. The computing power resource announcement method of claim 9, wherein the computing power extended community attribute information comprises computing power site information.

11. The computing power resource announcement method of any one of claims 1 to 10, wherein the BGP message comprises an address family identifier, AFI, and a subsequent address family identifier, SAFI; and setting an address family type in a BGP message to a computing power route type comprises:
setting a value of the AFI to an AFI value corresponding to the computing power route type; and
setting a value of the SAFI to a resource type value corresponding to a resource type of a computing power resource.

12. The computing power resource announcement method of claim 11, wherein the resource type of the computing power resource at least comprises one of:
an untyped computing power resource;
a hardware-type computing power resource; or
a software-type computing power resource.

13. The computing power resource announcement method of claim 1, wherein the BGP message is an update message; and the method further comprises:
setting a next hop attribute to a loopback address of the first node; and
adding the next hop attribute to the update message.

14. A routing table establishment method, applied to a second node, the method comprising:
generating, according to a computing power resource announcement message announced by a first node, a computing power routing table with a next hop being the first node, wherein the computing power resource announcement message is obtained according to the computing power resource announcement method of any one of claims 1 to 13.

15. A computing power traffic processing method, applied to a second node, the method comprising:
receiving computing power traffic sent to a computing power resource connected to a first node;
obtaining computing power resource information and a computing power encapsulation type according to a Border Gateway Protocol, BGP, message announced by the first node;
encapsulating the computing power traffic according to the computing power resource information and the computing power encapsulation type; and
sending the encapsulated computing power traffic to the first node, wherein the BGP message is obtained according to the computing power resource announcement method of claim 7 or 8.

16. The computing power traffic processing method of claim 15, wherein encapsulating the computing power traffic comprises at least one of:
performing a computing power header encapsulation and an outer layer encapsulation on the computing power traffic; or
performing the outer layer encapsulation on the computing power traffic.

17. The computing power traffic processing method of claim 16, wherein performing a computing power header encapsulation and an outer layer encapsulation on the computing power traffic comprises:
encapsulating at least one of a computing power resource identifier or a second node identifier carried in the computing power resource information in a computing power header; and
performing the outer layer encapsulation on the computing power traffic according to an encapsulation type indicated by the computing power encapsulation type.

18. The computing power traffic processing method of claim 17, wherein in response to the computing power resource information carrying the second node identifier, the second node identifier is a loopback address of the second node.

19. The computing power traffic processing method of claim 16, wherein performing the outer layer encapsulation on the computing power traffic comprises:
in response to the encapsulation type indicated by the computing power encapsulation type is SRv6, encapsulating the computing power resource identifier as a parameter into a last segment in a Segment List of an SRv6 packet.

20. The computing power traffic processing method of any one of claims 16 to 18, wherein the computing power header comprises computing power node information.

21. A computing power traffic processing method, applied to a first node, the method comprising:
receiving computing power traffic sent by a second node, wherein the computing power traffic is obtained according to the computing power traffic processing method of any one of claims 15 to 20;
decapsulating the computing power traffic to obtain target computing power resource information and decapsulated computing power traffic; and
forwarding the decapsulated computing power traffic to a target computing power resource according to the computing power routing table and the target computing power resource information.

22. The computing power traffic processing method of claim 21, wherein the target computing power resource information comprises a computing power resource identifier; and forwarding the decapsulated computing power traffic to a target computing power resource according to the computing power routing table and the target computing power resource information comprises:
forwarding the decapsulated computing power traffic to a computing power resource corresponding to the computing power resource identifier.

23. The computing power traffic processing method of claim 21, wherein the target computing power resource information comprises a computing power node identifier; and forwarding the decapsulated computing power traffic to a target computing power resource according to the computing power routing table and the target computing power resource information comprises:
forwarding the decapsulated computing power traffic to a computing power node corresponding to the computing power node identifier.

24. A communication device, comprising:
at least one processor; and
at least one memory configured to store at least one program,
wherein the at least one program, when executed by the at least one processor, causes the at least one processor to perform the computing power resource announcement method of any one of claims 1 to 13, the routing table establishment method of claim 14, or the computing power traffic processing method of any one of claims 15 to 23.

25. A computer-readable storage medium storing a processor-executable program, wherein the processor-executable program, when executed by a processor, causes the processor to perform the computing power resource announcement method of any one of claims 1 to 13, the routing table establishment method of claim 14, or the computing power traffic processing method of any one of claims 15 to 23.
